# EUROPÄISCHE PATENTANMELDUNG

(11) **EP 4 474 262 A1**
(43) Veröffentlichungstag der Anmeldung: **11.12.2024**
(21) Anmeldenummer: 24179702.6
(22) Anmeldetag: 03.06.2024
(51) Int. Cl.: B62M 6/45

(54) **VERFAHREN ZUM BETREIBEN EINER SCHIEBEHILFE EINES ELEKTROFAHRRADS**

(30) Priorität: 05.06.2023 DE 102023205208
(71) Anmelder: Robert Bosch GmbH, 70442 Stuttgart (DE)
(72) Erfinder: Mattes, Thomas, 72800 Eningen Unter Achalm (DE); Stegmaier, Juergen, 72827 Wannweil (DE)

(57) **Zusammenfassung**

Die Erfindung betrifft ein Verfahren zum Betreiben einer Schiebehilfe eines Elektrofahrrads (100), wobei das Elektrofahrrad (100) eine Antriebseinheit (2) zur Erzeugung eines Vortriebs und eine Gangschaltung (3) zwischen der Antriebseinheit (2) und einem Antriebsrad (101) des Elektrofahrrads (100) umfasst, wobei die Gangschaltung (3) elektronisch betätigbar ausgebildet ist, und wobei das Verfahren die Schritte umfasst, welche in einem Schiebehilfe-Modus des Elektrofahrrads (100) durchgeführt werden Ermitteln eines momentanen Übersetzungsverhältnisses der Gangschaltung (3), Betreiben der Antriebseinheit (2) zur Erzeugung eines Schiebehilfe-Motormoments, und gesteuertes Anpassen des Übersetzungsverhältnisses der Gangschaltung (3) in Abhängigkeit des ermittelten momentanen Übersetzungsverhältnisses.

## Beschreibung

### Stand der Technik

Die vorliegende Erfindung betrifft ein Verfahren zum Betreiben einer Schiebehilfe eines Elektrofahrrads, sowie ein Elektrofahrrad.

Bekannt sind Elektrofahrräder mit einer Schiebehilfe-Funktion. Dabei wird, beispielsweise im Ansprechen auf einen Knopfdruck durch einen Fahrer des Elektrofahrrads, ein Motormoment durch die Antriebseinheit des Elektrofahrrads erzeugt, um den Fahrer beim Schieben unterstützen zu können. Handelt es sich bei dem Antriebskonzept um einen Mittelmotor, das heißt, wenn die Antriebseinheit am Tretlager des Elektrofahrrads angeordnet ist, erfolgt die Übertragung des erzeugten Schiebehilfe-Motormoments über den weiteren Antriebsstrang an das Hinterrad des Elektrofahrrads. Damit ist das am Hinterrad wirkende Vortriebsmoment der Schiebehilfe abhängig von einer momentanen Übersetzung des Antriebsstrangs, beispielsweise der Schaltung. In Abhängigkeit der vorliegenden Übersetzung kann der resultierende Vortrieb der Schiebehilfe somit deutlich zu schwach oder auch zu stark für die momentane Situation sein. Zusätzlich ist häufig eine Limitierung der maximalen mittels der Schiebehilfe erzeugten Geschwindigkeit des Elektrofahrrads notwendig, üblicherweise auf maximal 6km/h. Eine Steuerung erfolgt dabei häufig basierend auf mittels eines am Hinterrad gemessenen Geschwindigkeitssignals. Insbesondere bei derartigen niedrigen Geschwindigkeiten ist die Erfassung der Geschwindigkeit häufig ungenau.

### Offenbarung der Erfindung

Das erfindungsgemäße Verfahren mit den Merkmalen des Anspruchs 1 zeichnet sich demgegenüber dadurch aus, dass eine optimierte Schiebehilfe für ein Elektrofahrrad bereitgestellt werden kann, welche in einer Vielzahl an möglichen Schiebesituationen einen besonders hohen Nutzerkomfort für einen Fahrer des Elektrofahrrads bereitstellen kann. Insbesondere kann dabei auf besonders einfache und komfortable Weise eine stets optimale Schiebe-Unterstützung ermöglicht werden. Dies wird erfindungsgemäß erreicht durch ein Verfahren zum Betreiben einer Schiebehilfe eines Elektrofahrrads, wobei das Elektrofahrrad eine Antriebseinheit zur Erzeugung eines Vortriebs, und eine Gangschaltung zwischen der Antriebseinheit und einem Antriebsrad des Elektrofahrrads umfasst. Die Gangschaltung ist dabei elektronisch betätigbar ausgebildet. Das Verfahren umfasst dabei die folgenden Schritte, welche in einem Schiebehilfe-Modus des Elektrofahrrads durchgeführt werden:
- Ermitteln eines momentanen Übersetzungsverhältnisses der Gangschaltung,
- Betreiben der Antriebseinheit zur Erzeugung eines Schiebehilfe-Motormoments, und
- gesteuertes Anpassen des Übersetzungsverhältnisses der Gangschaltung in Abhängigkeit des ermittelten momentanen Übersetzungsverhältnisses.

Als Gangschaltung kann dabei eine beliebige Gangschaltung vorgesehen sein, welche beispielsweise mehrere verschiedene diskrete Übersetzungsverhältnisse bereitstellen kann, wie beispielsweise eine Kettenschaltung mit mehreren Gängen. Alternativ bevorzugt kann auch eine Gangschaltung mit kontinuierlich veränderlichen Übersetzungsverhältnissen bereitgestellt werden, wie beispielsweise ein CVT-Getriebe.

Das Ermitteln des momentanen Übersetzungsverhältnisses kann beispielsweise mittels einer elektronischen Betätigungsvorrichtung der Gangschaltung erfolgen, wobei beispielsweise das momentane Übersetzungsverhältnis als elektronisches Signal der Betätigungsvorrichtung vorliegen kann.

Mit anderen Worten wird bei dem Verfahren, insbesondere im Ansprechen auf einen Start des Schiebehilfe-Modus, welcher vorzugsweise im Ansprechen auf ein erzeugtes Schiebehilfe-Signal, das beispielsweise durch eine Nutzereingabe erzeugt werden kann, zunächst das momentane Übersetzungsverhältnis der Gangschaltung ermittelt. Im Schiebehilfe-Modus erfolgt zudem ein Betreiben der Antriebseinheit, um ein Schiebehilfe-Motormoment zu erzeugen, das einen Vortrieb des Elektrofahrrads bewirkt. In Abhängigkeit des ermittelten momentanen Übersetzungsverhältnisses erfolgt zudem ein gesteuertes Anpassen des Übersetzungsverhältnisses der Gangschaltung, insbesondere über die elektronische Betätigungsvorrichtung.

Vorzugsweise kann das gesteuerte Anpassen des Übersetzungsverhältnisses während des Betreibens der Antriebseinheit erfolgen. Alternativ bevorzugt kann zuerst das Übersetzungsverhältnis angepasst werden, und, insbesondere unmittelbar daran anschließend, das Betreiben der Antriebseinheit beginnen.

Das gesteuerte Anpassen des Übersetzungsverhältnisses kann insbesondere als Schaltvorgang bzw. als "Schalten" angesehen werden.

Das Verfahren bietet somit den Vorteil, dass beim Betrieb der Schiebehilfe das aktuelle Übersetzungsverhältnis zwischen Antriebseinheit und Antriebsrad des Elektrofahrrads berücksichtigt und gezielt angepasst wird. Das Anpassen des Übersetzungsverhältnisses kann dabei anhand vielfältiger Faktoren erfolgen, wie beispielsweise basierend auf Sensordaten, welche eine momentane Schiebesituation des Elektrofahrrads repräsentieren. Alternativ oder zusätzlich kann ein besonders einfaches Verfahren bereitgestellt werden, in dem stets ein vordefiniertes Übersetzungsverhältnis bereitgestellt wird, das für eine Vielzahl an Schiebesituationen geeignet ist. Somit kann, wenn beispielsweise vor oder zu Beginn des Schiebehilfe-Modus eine besonders kleine oder große Übersetzung der Gangschaltung vorliegt, mit dem Beginn des Schiebehilfe-Modus eine für das Schieben des Elektrofahrrads passende Übersetzung eingestellt werden. Dadurch kann ein für den Benutzer des Elektrofahrrads besonders hoher Komfort beim Schieben des Elektrofahrrads bereitgestellt werden.

Die Unteransprüche haben bevorzugte Weiterbildungen der Erfindung zum Inhalt.

Bevorzugt erfolgt das Betreiben der Antriebseinheit derart, um ein konstantes Schiebehilfe-Motormoment während des Schiebehilfe-Modus bereitzustellen. Das heißt, das unmittelbar an einem Abtrieb der Antriebseinheit vorliegende Schiebehilfe-Motormoment der Antriebseinheit wird im Schiebehilfe-Modus nicht verändert, sondern stets mit einem konstanten Wert erzeugt. Dadurch kann ein besonders einfacher und effizienter Schiebehilfe-Betrieb bereitgestellt werden.

Besonders bevorzugt wird das Übersetzungsverhältnis der Gangschaltung derart gesteuert angepasst, um im Schiebehilfe-Modus ein vorbestimmtes Schiebehilfe-Übersetzungsverhältnis bereitzustellen. Das heißt, es ist genau ein bevorzugtes Übersetzungsverhältnis, nämlich das Schiebehilfe-Übersetzungsverhältnis, definiert, welches im Schiebehilfe-Modus automatisch eingestellt wird. Dadurch kann das Verfahren auf besonders einfache und kostengünstige Weise umgesetzt werden.

Vorzugsweise sind mindestens zwei unterschiedliche Soll-Übersetzungsverhältnisse definiert. Dabei wird bei dem Verfahren jeweils ein Übersetzungs-Unterschied des ermittelten momentanen Übersetzungsverhältnisses zu jedem der Soll-Übersetzungsverhältnisse ermittelt. Das gesteuerte Anpassen des Übersetzungsverhältnisses der Gangschaltung erfolgt dabei derart, um das ausgehend vom momentanen Übersetzungsverhältnis nächstgelegene Soll-Übersetzungsverhältnis einzustellen. Das heißt, beispielsweise bei einer Gangschaltung mit mehreren Gängen sind mindestens zwei bevorzugte Gänge definiert. Ausgehend von dem ermittelten momentanen Gang bzw. Übersetzungsverhältnis wird dabei im Schiebehilfe-Modus in den nächstgelegenen Gang geschalten. Dadurch kann beispielsweise eine minimale Änderung des Übersetzungsverhältnisses ermöglicht werden, wodurch besonders schnell ein für den Schiebebetrieb gut geeignetes Übersetzungsverhältnis eingelegt werden kann.

Weiter bevorzugt wird in dem Schiebehilfe-Modus zusätzlich eine momentane Geschwindigkeit des Elektrofahrrads ermittelt. Das gesteuerte Anpassen des Übersetzungsverhältnisses der Gangschaltung erfolgt dabei zusätzlich in Abhängigkeit der ermittelten momentanen Geschwindigkeit des Elektrofahrrads. Beispielsweise kann dabei, vorzugsweise bei konstantem Schiebehilfe-Motormoment und/oder bei konstanter Motordrehzahl, die durch den Vortrieb mittels des Schiebehilfe-Motormoments erzeugte Geschwindigkeit des Elektrofahrrads durch die Anpassung des Übersetzungsverhältnisses gesteuert werden. Beispielsweise kann dabei gesteuert werden, dass durch das gesteuerte Anpassen des Übersetzungsverhältnisses eine vorbestimmte Maximal-Schiebegeschwindigkeit nicht überschritten wird. Damit kann eine optimal auf die momentane Fortbewegung des Elektrofahrrads abgestimmte Anpassung der Schiebehilfe vorgenommen werden, wodurch für den Fahrer ein besonders hoher Nutzerkomfort ermöglicht werden kann.

Bevorzugt wird die momentane Geschwindigkeit des Elektrofahrrads basierend auf dem ermittelten momentanen Übersetzungsverhältnis und einer momentanen Motordrehzahl der Antriebseinheit ermittelt. Das heißt, die momentane Geschwindigkeit wird basierend auf der momentanen Motordrehzahl und einer Kenntnis der Gesamt-Übersetzung zwischen Abtrieb der Antriebseinheit und Antriebsrad des Elektrofahrrads, welche von der momentanen Übersetzung der Gangschaltung abhängig, ermittelt. Vorzugsweise kann die Motordrehzahl mittels eines Sensors und/oder basierend auf einer Ansteuerung der Antriebseinheit ermittelt werden. Damit kann die momentane Geschwindigkeit besonders präzise und zeitlich hoch aufgelöst ermittelt werden.

Vorzugsweise erfolgt das gesteuerte Anpassen des Übersetzungsverhältnisses der Gangschaltung derart, dass, vorzugsweise bei einem vorbestimmten konstanten Motordrehmoment und/oder einer vorbestimmten konstanten Motordrehzahl, die momentane Geschwindigkeit des Elektrofahrrads kleiner oder gleich einer vorbestimmten Maximal-Schiebegeschwindigkeit gehalten wird. Beispielsweise kann die Maximal-Schiebegeschwindigkeit 6 km/h betragen. Damit kann beispielsweise auf einfache Weise und zuverlässig sichergestellt werden, dass das Elektrofahrrad durch die Schiebehilfe nicht schneller als eine, beispielsweise vorgeschriebene, Maximal-Geschwindigkeit bewegt wird.

Besonders bevorzugt wird das gesteuerte Anpassen des Übersetzungsverhältnisses der Gangschaltung zusätzlich basierend auf einem ermittelten Motormoment der Antriebseinheit durchgeführt. Vorzugsweise kann das Motormoment mittels eines Momentensensors ermittelt werden, und/oder bevorzugt basierend auf einer Ansteuerung der Antriebseinheit ermittelt werden. Bevorzugt erfolgt das gesteuerte Anpassen des Übersetzungsverhältnisses dabei derart, dass das Übersetzungsverhältnis reduziert wird, wenn das ermittelte momentane Motordrehmoment größer oder gleich einem vorbestimmten Soll-Motormoment ist, besonders bevorzugt wenn zusätzlich die ermittelte Geschwindigkeit kleiner oder gleich einer vorbestimmten Soll-Schiebegeschwindigkeit ist und/oder wenn die ermittelte Geschwindigkeit abnimmt. Mit anderen Worten wird die Übersetzung reduziert, wenn das momentane Übersetzungsverhältnis zu groß ist, um die Fortbewegung des Elektrofahrrads durch die Antriebseinheit effizient bewerkstelligen zu können. Beispielsweise kann dies bei großen Steigungen der Fall sein. Alternativ oder zusätzlich bevorzugt kann in umgekehrter Weise das Übersetzungsverhältnis erhöht werden, wenn das ermittelte momentane Motordrehmoment kleiner einem vorbestimmten Soll-Motordrehmoment ist, und/oder vorzugsweise wenn die ermittelte Geschwindigkeit zunimmt.

Weiter bevorzugt erfolgt in dem Schiebehilfe-Modus zusätzlich ein Ermitteln einer momentanen Steigung, an der sich das Elektrofahrrad befindet. Das gesteuerte Anpassen des Übersetzungsverhältnisses der Gangschaltung erfolgt dabei zusätzlich in Abhängigkeit der ermittelten momentanen Steigung, und besonders bevorzugt zusätzlich basierend auf einem Gewicht des Elektrofahrrads. Dadurch kann eine besonders effiziente und komfortable Schiebehilfe-Funktion bereitgestellt werden.

Vorzugsweise erfolgt im Schiebehilfe-Modus zusätzlich ein Ermitteln einer momentanen Motordrehzahl, vorzugsweise mittels eines Sensors und/oder basierend auf einer Ansteuerung der Antriebseinheit. Dabei erfolgt das gesteuerte Anpassen des Übersetzungsverhältnisses der Gangschaltung derart, um die Motordrehzahl kleiner oder gleich einer vorbestimmten Maximal-Drehzahl zu halten, vorzugsweise wird die Maximal-Drehzahl dabei bei einer vorbestimmten Soll-Schiebergeschwindigkeit, die insbesondere im Schiebehilfemodus eingestellt wird, betrachtet. Insbesondere kann damit eine Geräuschemission der Antriebseinheit gering gehalten werden, wodurch ein besonders hoher Nutzerkomfort bereitgestellt werden kann.

Bevorzugt erfolgt in dem Schiebehilfe-Modus zusätzlich ein Ermitteln eines Antriebsrad-Moments basierend auf dem ermittelten Motormoment der Antriebseinheit und dem ermittelten momentanen Übersetzungsverhältnis. Das gesteuerte Anpassen des Übersetzungsverhältnisses der Gangschaltung erfolgt dabei derart, dass das Antriebsrad-Moment innerhalb eines vorbestimmten Momenten-Bereichs gehalten wird. Vorzugsweise kann der Momenten-Bereich einen Bereich ausgehend von einem vorbestimmten Soll-Antriebsrad-Moment und eine Abweichung von maximal 5 %, bevorzugt maximal 10 %, umfassen. Dadurch kann auch bei wechselnden Schiebersituationen, wie beispielsweise an wechselnden Steigungen, stets eine gleichmäßige Schiebehilfe bereitgestellt werden, wodurch ein besonders hoher Nutzerkomfort für einen Fahrer des Elektrofahrrads ermöglicht werden kann.

Weiterhin betrifft die Erfindung ein Elektrofahrrad, welches eine Antriebseinheit, eine Gangschaltung, die elektronische betätigbar ausgebildet ist, und eine Steuereinheit umfasst. Die Steuereinheit ist dabei vorzugsweise eingerichtet, um die Antriebseinheit und die Gangschaltung steuerbar zu betätigen. Ferner ist die Steuereinheit eingerichtet, das beschriebene Verfahren zum Betreiben der Schiebehilfe des Elektrofahrrads durchzuführen.

### Kurze Beschreibung der Zeichnungen

Im Folgenden wird die Erfindung anhand von Ausführungsbeispielen in Verbindung mit den Figuren beschrieben. In den Figuren sind funktional gleiche Bauteile jeweils mit gleichen Bezugszeichen gekennzeichnet. Dabei zeigt:
- Figur 1: eine vereinfachte schematische Ansicht eines Elektrofahrrads, bei dem ein Verfahren gemäß einem ersten Ausführungsbeispiel der Erfindung durchgeführt wird,
- Figur 2: eine vereinfachte schematische Ansicht von Signalflüssen bei der Durchführung des Verfahrens des ersten Ausführungsbeispiels
- Figur 3: eine vereinfachte schematische Ansicht eines Ablaufs des Verfahrens des ersten Ausführungsbeispiels,
- Figur 4: eine vereinfachte schematische Ansicht eines Ablaufs eines Verfahrens gemäß einem zweiten Ausführungsbeispiel der Erfindung, und
- Figur 5: eine vereinfachte schematische Ansicht eines Ablaufs eines Verfahrens gemäß einem dritten Ausführungsbeispiel der Erfindung.

### Bevorzugte Ausführungsformen der Erfindung

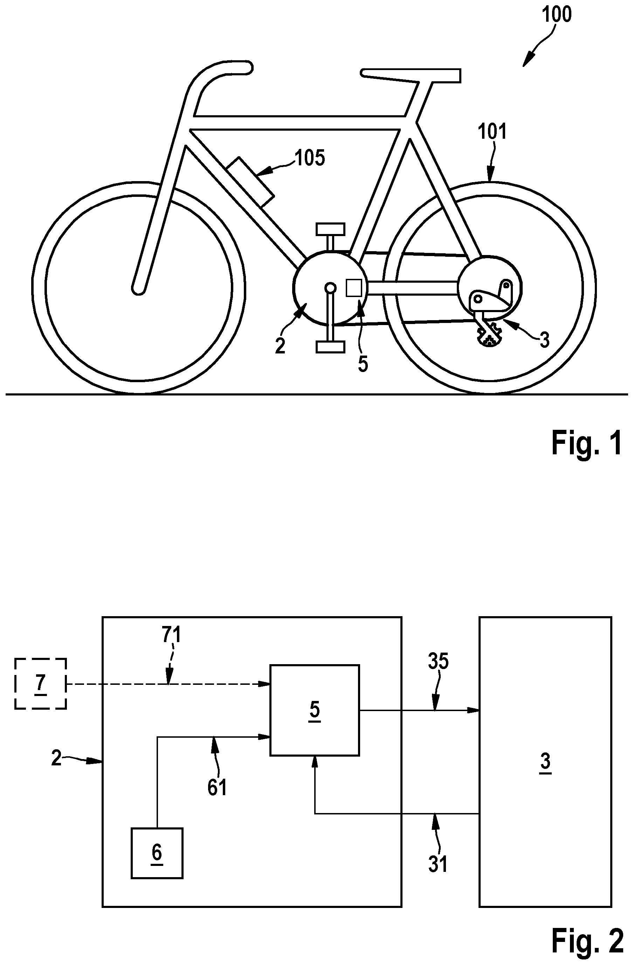

Figur 1 zeigt eine vereinfachte schematische Ansicht eines Elektrofahrrads 100, welches eine Antriebseinheit 2 und eine Gangschaltung 3 aufweist. Die Antriebseinheit 2 ist im Bereich eines Tretlagers des Elektrofahrrads 100 angeordnet und umfasst einen Motor, welcher insbesondere ein Elektromotor ist. Der Motor kann mittels eines elektrischen Energiespeichers 105 des Elektrofahrrads 100 mit elektrischer Energie versorgt werden.

Durch ein mittels der Antriebseinheit 2 erzeugtes Motordrehmoment kann eine durch Muskelkraft erzeugte Tretkraft eines Fahrers des Elektrofahrrads 100 motorisch unterstützt werden.

Die Gangschaltung 3 des Elektrofahrrads 100 ist in der Figur 1 stark vereinfacht schematisch angedeutet. Insbesondere umfasst die Gangschaltung 3 zumindest eine Schaltung, mittels welcher ein Übersetzungsverhältnis im Antriebssystem des Elektrofahrrads 100, insbesondere zwischen der Antriebseinheit 2 und einem Antriebsrad 101, welches das Hinterrad des Elektrofahrrads 100 ist, verändert werden kann. Beispielsweise kann die Schaltung als Kettenschaltung an einer Hinterradnabe und/oder an Kettenblättern vorgesehen sein, wobei insbesondere mittels verschieden großer Ritzel verschiedene Übersetzungsverhältnisse bereitgestellt werden können. Alternativ bevorzugt können auch andere Arten an Schaltungen, wie beispielsweise Getriebe oder Nabenschaltungen oder Schaltungen mit kontinuierlich veränderlichen Übersetzungen vorgesehen sein.

Die Gangschaltung 3 ist dabei elektronisch betätigbar ausgebildet. Das heißt, eine Änderung des Übersetzungsverhältnisses der Gangschaltung 3 kann mittels eines elektronischen Schaltsignals initiiert werden. Bevorzugt umfasst die Gangschaltung 3 dabei einen Aktuator, der eingerichtet ist, das Übersetzungsverhältnis im Ansprechen auf einen Empfang eines Schaltsignals zu verändern, beispielsweise durch Bewegen eines Schaltwerks. Ein Schaltsignal kann vorzugsweise durch eine manuelle Betätigung durch einen Fahrer des Elektrofahrrads 100 erzeugt werden.

Das Elektrofahrrad 100 umfasst zudem eine Steuereinheit 5, welche eingerichtet ist die Antriebseinheit 2 und die Gangschaltung 3 zu betätigen. Vorzugsweise kann die Steuereinheit 5, wie in der Figur 1 vereinfacht schematisch dargestellt, in die Antriebseinheit 2 integriert sein. Die Steuereinheit 5 ist ausgebildet, um ein Schaltsignal erzeugen zu können. Die Steuereinheit 5 ist dabei zudem ausgebildet, um ein Verfahren zum Betreiben einer Schiebehilfe des Elektrofahrrads 100 gemäß einem ersten Ausführungsbeispiel der Erfindung durchzuführen.

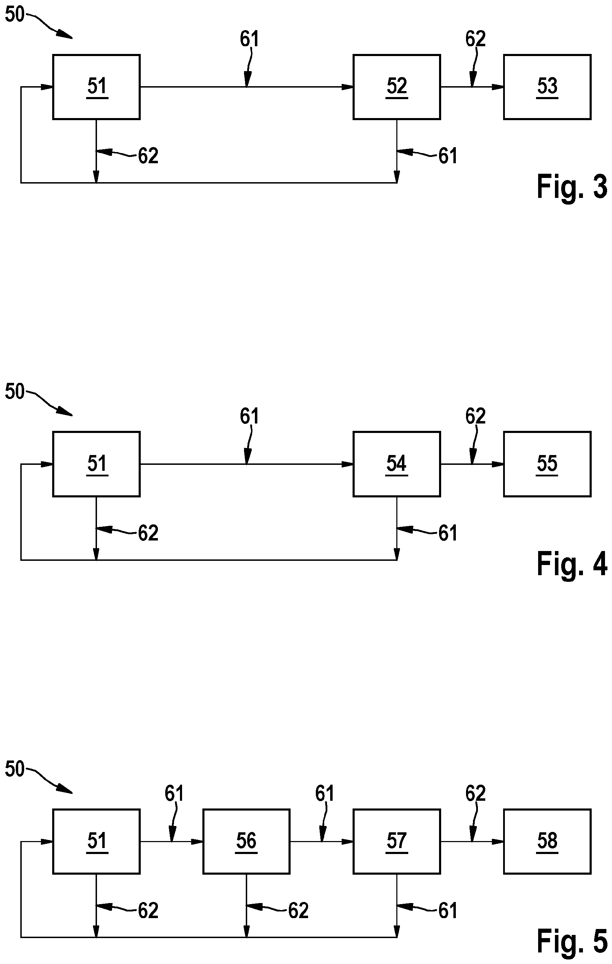

Das Verfahren wird nachfolgend im Detail beschrieben, wobei auf die Figuren 2 und 3 Bezug genommen wird. Figur 2 zeigt dabei eine vereinfachte schematische Ansicht von Signalflüssen bei der Durchführung des Verfahrens, insbesondere zwischen der Antriebseinheit 5 und der Gangschaltung 3.

Bei dem Verfahren erfolgt in einem Schiebehilfe-Modus eine Betätigung der Antriebseinheit 2 durch die Steuereinheit 5 derart, dass die Antriebseinheit 2 ein konstantes Schiebehilfe-Motormoment erzeugt. Über den Antriebsstrang des Elektrofahrrads 100, welcher insbesondere die Gangschaltung 3 umfasst, wird dadurch das Antriebsrad 101 des Elektrofahrrads 100 angetrieben, sodass an diesem ein Antriebsrad-Moment vorliegt, welches einen Vortrieb des Elektrofahrrads 100 bewirkt. Dadurch kann das Motormoment der Antriebseinheit 2 genutzt werden, um den Fahrer bei einem Schieben des Elektrofahrrads 100 zu unterstützen.

Bei dem Verfahren erfolgt dabei in dem Schiebehilfe-Modus eine gezielte Anpassung des Übersetzungsverhältnisses der Gangschaltung 3. Hierfür erzeugt die Steuereinheit 5 ein Schaltsignal 35, welches an die elektronische Gangschaltung 3 übermittelt wird, um die Änderung des Übersetzungsverhältnisses zu initiieren.

Das Schaltsignal 35 wird dabei in Abhängigkeit eines ermittelten momentanen Übersetzungsverhältnisses der Gangschaltung 3 erzeugt. Das momentane Übersetzungsverhältnis kann von der Steuereinheit 5 basierend auf einem Gangsignal 31, welches vorzugsweise den momentan eingelegten Gang der Gangschaltung 3 repräsentiert, ermittelt werden.

Zusätzlich können weitere Signale, wie ein Motor-Drehzahlsignal 61, welches vorzugsweise durch einen Motordrehzahl-Sensor 6 erzeugt wird, und vorzugsweise zusätzlich ein Geschwindigkeitssignal 71, welches eine momentane Geschwindigkeit des Elektrofahrrads 100 repräsentiert, verwendet werden, um basierend darauf das gesteuerte Anpassen des Übersetzungsverhältnisses der Gangschaltung 3 vorzunehmen.

Das Geschwindigkeitssignal 71 kann dabei beispielsweise mittels eines Geschwindigkeitssensors 7 bereitgestellt werden. Alternativ kann das Geschwindigkeitssignal 71 vorzugsweise basierend auf einer Berechnung der Steuereinheit 5 bereitgestellt werden, welche basierend auf dem ermittelten momentanen Übersetzungsverhältnis der Gangschaltung 3 sowie basierend auf der Motordrehzahl ermittelt werden kann. Damit kann eine besonders präzise Ermittlung der Geschwindigkeit des Elektrofahrrads 100 erfolgen.

Im ersten Ausführungsbeispiel des Verfahrens erfolgt dabei eine besonders einfache Durchführung. Der Ablauf des Verfahrens ist vereinfacht schematisch in dem Ablaufdiagramm 50 der Figur 3 dargestellt, welches vorzugsweise als ein Entscheidungsdiagramm ausgebildet ist. In einem ersten Schritt 51 wird dabei ermittelt, ob der Schiebehilfe-Modus aktiv ist. Falls dies nicht der Fall ist, wird über den negativen Pfad 62 kein weiterer Schritt unternommen. Sofern der Schiebehilfe-Modus aktiv ist, folgt entsprechend des positiven Pfads 61 der nächste Schritt 52, in welchem ermittelt wird, ob das ermittelte momentane Übersetzungsverhältnis der Gangschaltung 3 einem vorbestimmten Schiebehilfe-Übersetzungsverhältnis entspricht. Wenn dies nicht der Fall ist, wird über den negativen Pfad 62 der nächste Schritt 53 ausgeführt, in dem die Gangschaltung 3 derart betätigt wird, dass in das vorbestimmte Schiebehilfe-Übersetzungsverhältnis gewechselt wird. Falls das vorbestimmte Schiebehilfe-Übersetzungsverhältnis bereits vorliegt wird entsprechend des positiven Pfads 61 kein weiterer Schritt unternommen.

Somit kann in dem Schiebehilfe-Modus, während durch die Antriebseinheit 2 das Schiebehilfe-Motormoment erzeugt wird, stets sichergestellt werden, dass die Gangschaltung 3 das vorbestimmte Schiebehilfe-Übersetzungsverhältnis bereitstellt, um in vielfältigen Schiebesituationen eine geeignete Schiebeunterstützung für den Fahrer des Elektrofahrrads 100 bereitzustellen.

Figur 4 zeigt eine vereinfachte schematische Ansicht eines Ablaufdiagramms 50 eines Verfahrens gemäß einem zweiten Ausführungsbeispiel der Erfindung. Das zweite Ausführungsbeispiel entspricht im Wesentlichen dem ersten Ausführungsbeispiel der Figuren 1 bis 3, mit dem Unterschied, dass zwei unterschiedliche Soll-Übersetzungsverhältnisse definiert sind, in welche die Gangschaltung 3 während des Schiebehilfe-Modus geschalten werden kann. Dabei erfolgt in dem zweiten Schritt 52 des Verfahrens ein Ermitteln, ob momentan eines der beiden vordefinierten Soll-Übersetzungsverhältnisse vorliegt. Wenn dies nicht der Fall ist, entsprechend des Pfads 62, wird im nächsten Schritt 53 jeweils ein Übersetzungs-Unterschied des ermittelten momentanen Übersetzungsverhältnisses zu jedem der Soll-Übersetzungsverhältnisse ermittelt. Zudem wird das Übersetzungsverhältnis der Gangschaltung 3 derart gesteuert angepasst, um das nächstgelegene Soll-Übersetzungsverhältnis einzustellen.

Dadurch kann ermöglicht werden, dass eine geringere Anzahl an Gängen durchgeschaltet werden muss im Schiebehilfe-Modus, um ein für die Schiebehilfe vorteilhaftes Übersetzungsverhältnis bereitzustellen. Somit kann auch ein Nutzerkomfort weiter erhöht werden.

Figur 5 zeigt eine vereinfachte schematische Ansicht eines Ablaufdiagramms 50 eines Verfahrens gemäß einem zweiten Ausführungsbeispiel der Erfindung. Das zweite Ausführungsbeispiel entspricht im Wesentlichen dem ersten Ausführungsbeispiel der Figuren 1 bis 3, mit dem Unterschied, dass eine flexiblere Anpassung des Übersetzungsverhältnisses bereitgestellt werden kann, welche in Abhängigkeit des Motordrehmoments und der Geschwindigkeit vorgenommen wird.

Dabei wird in dem zweiten Schritt 56 ermittelt, ob das momentane Motormoment der Antriebseinheit 2 größer oder gleich einem vorbestimmten Soll-Motordrehmoment ist. Vorzugsweise kann das Soll-Motordrehmoment 90 % eines maximal bereitstellbaren Motordrehmoments betragen. Wenn dies entsprechend des Pfads 61 der Fall ist, wird in einem nächsten Schritt 57 ermittelt, ob die ermittelte momentane Geschwindigkeit abnimmt. Wenn dies zutrifft, wird über den Pfad 61 der nächste Schritt 58 ausgeführt, in dem das

Übersetzungsverhältnis der Gangschaltung 3 reduziert wird. Vorzugsweise wird dabei in den nächstkleineren Gang geschalten.

Dadurch kann eine besonders präzise und effiziente Anpassung der Schiebehilfe an die momentane Schiebesituation erfolgen, um stets zuverlässig eine optimale Unterstützung des Fahrers des Elektrofahrrads 100 beim Schieben bereitstellen zu können.

## Patentansprüche

1. Verfahren zum Betreiben einer Schiebehilfe eines Elektrofahrrads (100), wobei das Elektrofahrrad (100) eine Antriebseinheit (2) zur Erzeugung eines Vortriebs und eine Gangschaltung (3) zwischen der Antriebseinheit (2) und einem Antriebsrad (101) des Elektrofahrrads (100) umfasst, wobei die Gangschaltung (3) elektronisch betätigbar ausgebildet ist, und wobei das Verfahren die Schritte umfasst, welche in einem Schiebehilfe-Modus des Elektrofahrrads (100) durchgeführt werden:
- Ermitteln eines momentanen Übersetzungsverhältnisses der Gangschaltung (3),
- Betreiben der Antriebseinheit (2) zur Erzeugung eines Schiebehilfe-Motormoments, und
- gesteuertes Anpassen des Übersetzungsverhältnisses der Gangschaltung (3) in Abhängigkeit des ermittelten momentanen Übersetzungsverhältnisses.

2. Verfahren nach Anspruch 1, wobei das Betreiben der Antriebseinheit (2) derart erfolgt, um ein konstantes Schiebehilfe-Motormoment während des Schiebehilfe-Modus bereitzustellen.

3. Verfahren nach einem der vorhergehenden Ansprüche, wobei das Übersetzungsverhältnis der Gangschaltung (3) derart gesteuert angepasst wird, um ein vorbestimmtes Schiebehilfe-Übersetzungsverhältnis bereitzustellen.

4. Verfahren nach einem der Ansprüche 1 oder 2,
- wobei mindestens zwei unterschiedliche Soll-Übersetzungsverhältnisse definiert sind,
- wobei jeweils ein Übersetzungs-Unterschied des ermittelten momentanen Übersetzungsverhältnisses zu jedem der Soll-Übersetzungsverhältnisse ermittelt wird, und
- wobei das Übersetzungsverhältnis der Gangschaltung (3) derart gesteuert angepasst wird, um das nächstgelegene Soll-Übersetzungsverhältnis einzustellen.

5. Verfahren nach einem der vorhergehenden Ansprüche,
- wobei im Schiebehilfe-Modus zusätzlich eine momentane Geschwindigkeit des Elektrofahrrads (100) ermittelt wird, und
- wobei das gesteuerte Anpassen des Übersetzungsverhältnisses der Gangschaltung (3) zusätzlich in Abhängigkeit der ermittelten momentanen Geschwindigkeit erfolgt.

6. Verfahren nach Anspruch 5, wobei die momentane Geschwindigkeit basierend auf dem ermittelten momentanen Übersetzungsverhältnis und einer momentanen Motordrehzahl der Antriebseinheit (2) ermittelt wird.

7. Verfahren nach Anspruch 5 oder 6, wobei das gesteuerte Anpassen des Übersetzungsverhältnisses der Gangschaltung (3) derart erfolgt, dass die momentane Geschwindigkeit des Elektrofahrrads (100) kleiner oder gleich einer vorbestimmten Maximal-Schiebegeschwindigkeit gehalten wird.

8. Verfahren nach einem der vorhergehenden Ansprüche, wobei das gesteuerte Anpassen des Übersetzungsverhältnisses der Gangschaltung (3) zusätzlich basierend auf einem ermittelten Motormoment der Antriebseinheit (2) durchgeführt wird, insbesondere derart, dass das Übersetzungsverhältnis reduziert wird, wenn das ermittelte momentane Motordrehmoment größer oder gleich einem vorbestimmten Soll-Motordrehmoment ist, vorzugsweise wenn zusätzlich die ermittelte Geschwindigkeit kleiner oder gleich einer vorbestimmten Soll-Schiebegeschwindigkeit ist und/oder wenn die ermittelte Geschwindigkeit abnimmt.

9. Verfahren nach einem der vorhergehenden Ansprüche,
- wobei im Schiebehilfe-Modus zusätzlich ein Ermitteln einer momentanen Steigung erfolgt, und
- wobei das gesteuerte Anpassen des Übersetzungsverhältnisses der Gangschaltung (3) zusätzlich in Abhängigkeit der ermittelten momentanen Steigung, und vorzugsweise zusätzlich basierend auf einem Gewicht des Elektrofahrrads (100), erfolgt.

10. Verfahren nach einem der vorhergehenden Ansprüche, wobei im Schiebehilfe-Modus zusätzlich ein Ermitteln einer momentanen Motordrehzahl erfolgt, und wobei das gesteuerte Anpassen des Übersetzungsverhältnisses der Gangschaltung (3) derart erfolgt, um die Motordrehzahl kleiner oder gleich einer vorbestimmten Maximal-Drehzahl zu halten, vorzugsweise bei einer vorbestimmten Soll-Schiebegeschwindigkeit.

11. Verfahren nach einem der vorhergehenden Ansprüche,
- wobei im Schiebehilfe-Modus zusätzlich ein Ermitteln eines Antriebsrad-Moments basierend auf dem ermittelten Motormoment der Antriebseinheit (2) und dem ermittelten momentanen Übersetzungsverhältnis erfolgt, und
- wobei das gesteuerte Anpassen des Übersetzungsverhältnisses der Gangschaltung (3) derart erfolgt, dass das Antriebsrad-Moment innerhalb eines vorbestimmten Momenten-Bereichs gehalten wird.

12. Elektrofahrrad, umfassend:
- eine Antriebseinheit (2),
- eine Gangschaltung (3), welche elektronisch betätigbar ausgebildet ist, und
- eine Steuereinheit (5), welche eingerichtet ist, das Verfahren nach einem der vorhergehenden Ansprüche durchzuführen.
